Europäisches Patentamt

(19) European Patent Office

Office européen des brevets

(11) Numéro de publication: **0 069 071**
**B1**

(12) **FASCICULE DE BREVET EUROPEEN**

(45) Date de publication du fascicule du brevet: **19.11.87**

(21) Numéro de dépôt: **82810263.2**

(22) Date de dépôt: **14.06.82**

(51) Int. Cl.⁴: **G 01 B 11/24,** G 01 B 11/26

(54) **Procédé d'identification d'un objet et de mesure de sa position et de son orientation, et dispositif pour la mise en oeuvre de ce procédé.**

(30) Priorité: **30.06.81 FR 8113002**

(43) Date de publication de la demande:
**05.01.83 Bulletin 83/01**

(45) Mention de la délivrance du brevet:
**19.11.87 Bulletin 87/47**

(84) Etats contractants désignés:
**CH DE GB IT LI NL**

(56) Documents cités:
**DE-A-3 048 558**
**US-A-4 111 526**
**US-A-4 174 885**
**US-A-4 207 002**
**US-A-4 213 704**

(73) Titulaire: **CIBA-GEIGY AG**
**Klybeckstrasse 141**
**CH-4002 Basel (CH)**

(72) Inventeur: **Dändliker, René**
**Route des Pins 14**
**CH-2045 Corcelles (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 069 071 B1

## Description

La présente invention se rapporte à un procédé d'identification d'un objet et de mesure de sa position et de son orientation selon le préambule de la revendication 1, ainsi qu'à un dispositif correspondant au préambule de la revendication 4.

Le problème de l'identification d'un objet et de la mesure de sa position et de son orientation se pose dans de nombreux domaines de la technique, par example dans le domaine de la réalisation de machines capables d'assembler automatiquement les différents composants d'un ensemble ou d'un sous-ensemble mécanique, électrique ou autre. Ces machines sont souvent appelées des robots industriels.

Des dispositifs permettant de résoudre ce problème ont déja été proposés. La demande de brevet français no 2.405.517, par exemple, décrit un dispositif comprenant une mémoire dans laquelle sont stockées des informations fournies par une caméra de télévision dirigée sur l'objet à identifier. Les informations mémorisées sont analysées par des moyens électroniques pour déterminer la position du centre de gravité de l'image représentant l'objet examiné, et pour fournir un signal électrique caractéristique de la forme de cet objet. Ce signal électrique est ensuite comparé à un certain nombre de signaux mémorisés lors d'une phase d'apprentissage et caractéristiques, chacun, d'un des types d'objet qui peuvent se présenter devant le dispositif. Le résultat de cette comparaison permet d'identifier l'objet examiné et de déterminer sa position angulaire par rapport à une position de référence.

Ce dispositif présente l'inconvénient d'être lent à cause du nombre considérable d'informations qu'il doit traiter. Les distorsions introduites par la caméra de télévision peuvent en outre conduire à des erreurs d'identification de l'objet et de mesure de sa position.

D'autres dispositifs, décrits par exemple dans le brevet américain no 4.207.002, mesurent la corrélation entre une image représentative du spectre de Fourier de l'objet examiné et le spectre de Fourier d'un objet de référence enregistré sous forme d'un hologramme. Une bonne corrélation indique que l'objet examiné est identique à l'objet de référence. La position du pic de corrélation dans le plan de mesure donne en outre une information sur la position de l'objet examiné.

Par rapport au dispositif précédent, ce dispositif présente le grand avantage de traiter en parallèle toutes les informations représentatives de l'objet examiné. Il est donc très rapide.

Ce dispositif présente cependant l'inconvénient d'être très sensible à la position angulaire de l'objet examiné. Si cette position n'est pas identique à celle de l'objet de référence qui a servi à confectionner l'hologramme, la hauteur ou l'intensité du pic de corrélation est diminuée, et ce dernier peut même disparaître.

Cet inconvénient peut être supprimé à l'aide d'un dispositif auxiliaire, décrit par exemple dans le brevet américain no 4.174.885, qui entraîne l'hologramme de référence en rotation. Ce dispositif auxiliaire complique cependant sérieusement la réalisation du dispositif de reconnaissance et diminue sa vitesse de fonctionnement.

En outre, un tel dispositif ne permet de reconnaître qu'un seul type d'objet à la fois. Si plusieurs types d'objets de forme différente doivent être reconnus, il faut prévoir plusieurs dispositifs munis chacun de l'hologramme correspondant à un de ces types d'objet.

L'objet de la présente invention est donc d'améliorer les dispositifs connus dans le sens de les rendre capable d'extraire d'une façon simple et efficace et sans l'utilisation de pièces méchaniques ou optiques mouvantes non seulement une information sur la forme géométrique et la position angulaire mais aussi sur la position locale d'un objet à identifier.

Le procédé selon l'invention est décrit dans la revendication 1.

Le dispositif correspondant pour la mise en oeuvre de ce procédé est décrit dans la revendication 4.

L'invention va être maintenant décrite en détail, à l'aide du dessin dans lequel:

—La figure 1 est un schéma synoptique d'une forme d'exécution du dispositif selon l'invention;

—La figure 2 illustre une manière de représenter la position de l'objet;

—La figure 3 illustre une manière de déterminer la position de l'objet;

—La figure 4 est un schéma synoptique d'une deuxième forme d'exécution du dispositif selon l'invention; et

—La figure 5 est un schéma synoptique d'une troisième forme d'exécution du dispositif selon l'invention.

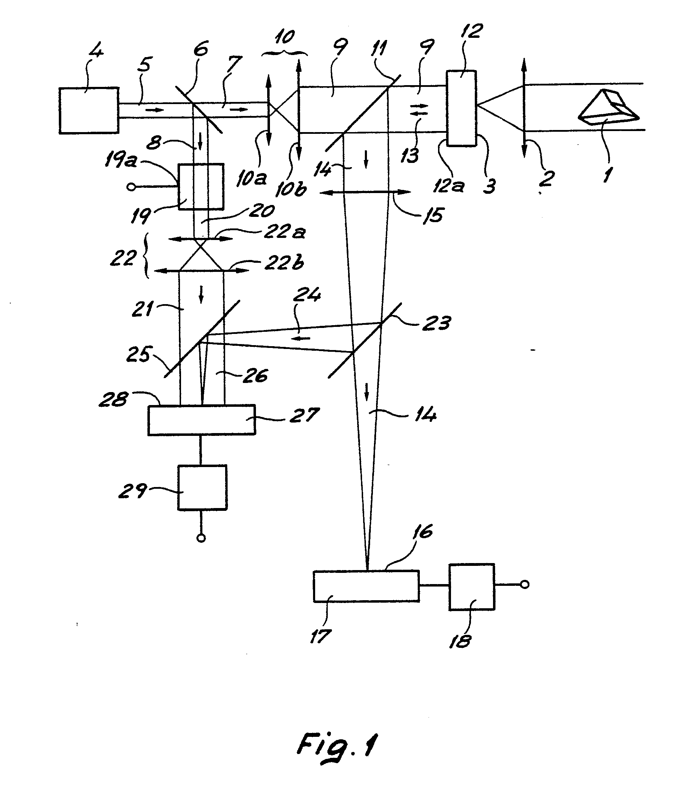

Dans la forme d'exécution représentée à la figure 1, les objets qui doivent être identifiés et dont la position et l'orientation doivent être mesurées, dont un exemple est désigné par la référence 1, sont amenés un à un devant le dispositif, par un ruban transporteur, ou tout autre moyen de transport, non représenté. Ils sont éclairés par une source de lumière non cohérente également non représentée.

Une lentille convergente 2, disposée à une distance bien déterminée du ruban transporteur, forme une image de l'objet dans le plan 3, qui est le plan conjugué du plan du ruban transporteur par rapport à la lentille 2.

Un laser 4 émet un faisceau de lumière cohérente 5. (Il faut noter que la flèche dessinée dans le faisceau 5, comme les autres flèches dessinées dans les autres faisceaux dont il sera question ci-dessous, indique simplement le sens de propagation du faisceau).

Une lame séparatrice 6 divise le faisceau 5 en deax faisceaux partiels 7 et 8. Le faisceau 7 est élargi en un faisceau 9 par un système optique 10 comprenant deux lentilles convergentes 10a et 10b.

Le faisceau 9 traverse une deuxième lame séparatrice 11 et atteint une première face 12a d'un convertisseur incohérent-cohérent 12 dont la deuxième face est située dans le plan 3.

De tels convertisseurs sont connus, notamment par le compte-rendu de l'exposé de MM J. Grinberg et al. à la Conférence Internationale sur les Applications de l'Holographie et le Traitement Optique de l'information, tenue à Jérusalem du 23 au 26 août 1976 (édité par MM. E. Marom et al. chez Pergamon Press à Oxford).

Ces convertisseurs ne seront pas décrits en détail ici. Il suffit de savoir que le convertisseur 12 transforme le faisceau incident 9 en un faisceau réfléchi 13, et que l'intensité de la lumière cohérente réfléchie en chaque point de la face 12a du convertisseur 12, ou en chaque point d'une section quelconque du faisceau 13, dépend de l'intensité de la lumière non cohérente au point correspondant du plan 3. La répartition de l'intensité lumineuse dans le faisceau 13 est donc représentative de l'objet 1.

Le faisceau 13, qui se confond dans la figure 1 avec le faisceau incident 9, est dévié par la lame séparatrice 11 pour former un faisceau 14. Une lentille convergente 15, disposée sur le trajet du faisceau 14, forme dans son plan focal 16 une image qui résulte de l'interférence de tous les rayons élémentaires formant le faisceau 14.

La théorie de l'optique cohérente montre que la fonction qui décrit la répartition de l'intensité lumineuse dans le plan 16 est la transformée de Fourier complexe de la fonction qui décrit la répartition de l'intensité lumineuse dans le plan 12a. En d'autres termes, l'image formée dans le plan 16 est une représentation du spectre de Fourier de cette dernière fonction.

La position de ce spectre de Fourier dans le plan 16 est indépendante de la position de l'objet 1 devant l'objectif 2. Ce spectre comporte toujours une tache lumineuse au foyer du système optique 15. L'intensité lumineuse dans cette tache est proportionnelle au coefficient du terme de fréquence nulle dans la transformée de Fourier ou, en d'autres termes, à la composante continue de la fonction décrivant la répartition de l'intensité lumineuse dans le plan 12a.

L'orientation du spectre de Fourier dépend par contre de l'orientation de l'objet 1. Si cet objet est tourné d'un certain angle, le spectre de Fourier tourne d'un angle égal.

Un détecteur photo-électrique 17 est placé de manière que sa surface sensible se trouve dans le plan 16. Il comprend une série de cellules photoélectriques disposées en cercle autour du foyer du système optique 15. Les signaux électriques délivrés par ces cellules représentent donc un échantillon réduit de la quantité enorme d'informations disponibles dans le spectre de Fourier.

Le nombre de cellules composant le détecteur 17 doit être suffisamment grand pour que cet échantillon soit bien caractéristique du spectre de Fourier, et donc de l'objet examiné. Ce nombre ne doit cependant pas être trop grand, car le temps de traitement des signaux fournis par ces cellules deviendrait alors trop long.

Les informations fournies par le détecteur 17 sont d'autant plus caractéristiques de l'objet examine que le diamètre du cercle formé par les cellules est grand. Mais comme l'intensité lumineuse dans le spectre de Fourier diminue généralement lorsque la distance au centre augmente, ce diamètre ne doit pas être choisi trop grand. Les signaux fournis par les cellules pourraient alors devenir trop faibles, ce qui compliquerait leur traitement ultérieur.

Les signaux de mesure fournis par le détecteur 17 sont comparés dans un circuit électronique 18 à des signaux de référence mémorisés pendant une étape d'apprentissage préalable.

Dans cette étape d'apprentissage, un exemplaire de chaque type d'objet que le dispositif est destiné à reconnaître est placé dans une position et une orientation bien définies devant l'objectif 2. Pour chaque objet, l'ensemble des signaux fournis par le détecteur 17 est enregistré dans une mémoire particulière faisant partie du circuit 18, pour servir de signaux de référence pendant l'utilisation du dispositif.

Il faut relever que le dispositif ne reconnaît les objets à trois dimensions que par leur image à deux dimensions formée dans le plan 3. Si un objet peut avoir deux, ou plus, images différentes selon la face sur laquelle il repose sur le ruban transporteur, il faut enregistrer les signaux de référence fournis dans chaque cas par le détecteur 17 dans des mémoires différentes. Cette disposition convient bien au but recherché, car le robot qui utilise les informations fournies par le dispositif doit bien entendu manipuler différemment un tel objet selon la face sur laquelle il repose.

Pendant l'utilisation du dispositif, l'ensemble des signaux de mesure fournis par le détecteur 17 est tout d'abord introduit dans un registre à décalage, puis déplacé cycliquement, dans ce registre, pour simuler une rotation du capteur 17 dans le plan 16 ou de l'objet 1 sur le ruban transporteur. A chaque pas de ce déplacement, cet ensemble de signaux de mesure est comparé successivement à chacun des ensembles de signaux de référence. Cette comparaison peut être faite en calculant, à chaque pas, la corrélation existant entre l'ensemble de signaux de mesure et chaque ensemble de signaux de référence.

Le circuit 18 détermine enfin laquelle de toutes ces comparaisons successives a donné le meilleur résultat. L'ensemble de signaux de référence pour lequel ce résultat maximum a été obtenu indique à quel type d'objet appartient l'objet examiné, et le nombre des déplacements des signaux de mesure dans le registre à décalage qui ont dû être exécutés pour obtenir ce résultat maximum indique l'orientation de l'objet examiné par rapport à l'orientation que l'objet correspondant avait pendant l'étape d'apprentissage.

Si aucune de ces comparaisons successives ne donne un résultat dépassant un résultat minimum fixé à l'avance, l'object examiné est considéré comme ne faisant pas partie des objects utilisables par le robot.

Les moyens décrits jusqu'ici permettent de fournir à l'ordinateur commandant le robot associé au dispositif une information représentative du type de l'objet examiné et de son orientation. L'information concernant la position de l'objet examiné est également présente dans le spectre de Fourier formé dans le plan 17, sous la forme de la phase relative des différents rayons élémentaires formant le faisceau 14. La fréquence de la lumière est cependant trop élevée pour que cette phase puisse être mesurée directement. Cette difficulté est surmontée par les moyens qui vont être décrits ci-dessous et qui sont également représentés à la figure 1.

Ces moyens comportent un dispositif 19, placé sur le trajet du faisceau 8, et destiné à produire un faisceau 29 de lumière cohérente à une fréquence différente de celle du faisceau 14. De tels dispositifs, qui peuvent par exemple comprendre un modulateur acousto-optique, sont connus et ne seront pas décrits ici. Il suffit de savoir que la différence entre la fréquence du faisceau 20 et la fréquence du faisceau 14 est dérerminée par la fréquence d'un signal de commande applique, par des moyens non représentés, à l'entrée 19a du dispositif 19. Cette différence peut avoir une valeur comprise, pratiquement, entre quelques kiloherz et quelques centaines de kiloherz.

Le faisceau 20 sortant du dispositif 19 est élargi en un faisceau 21 par un système optique 22, comprenant deux lentilles 22a et 22b, de maniere que sa section soit sensiblement égale à la section du faisceau 14.

Une troisième lame séparatrice 23, placée entre la lentille 15 et le plan 16 dirige une partie 24 du faisceau 14 vers une quatrième lame séparatrice 25, placée, elle, sur le trajet du faisceau 21.

Le faisceau 26 formé par la combinaison du faisceau 21 et du faisceau 24 tombe sur une deuxième détecteur photo-électrique 27 dont la partie sensible est placée dans un plan 28.

Le détecteur 27 et les lames séparatrices 23 et 25 sont placés de manière que la longueur du chemin optique entre la lentille 15 et le plan 28 soit égale à la distance focale de cette lentille 15. En l'absence du faisceau 21, l'image formée dans ce plan 28 par le faisceau 24 serait donc semblable à l'image du spectre de Fourier formée dans le plan 16.

L'interférence des faisceaux 21 et 24 fait cependant apparaître dans le plan 28 un réseau de franges d'interférences, superposées à ce spectre de Fourier. Dans la tache centrale du spectre de Fourier, ces franges sont sensiblement parallèles les unes aux autres, et se déplacent perpendiculairement à leur direction générale à une vitesse qui ne dépend que de la différence des fréquences des faisceaux 21 et 24, et donc de la fréquence, connue, du signal de commande du dispositif 19.

La position de l'image de l'objet dans le plan 12a, et donc la position de l'objet 1, peut être déterminée par la mesure de la distance séparant ces franges, de leur sens et de leur direction de déplacement.

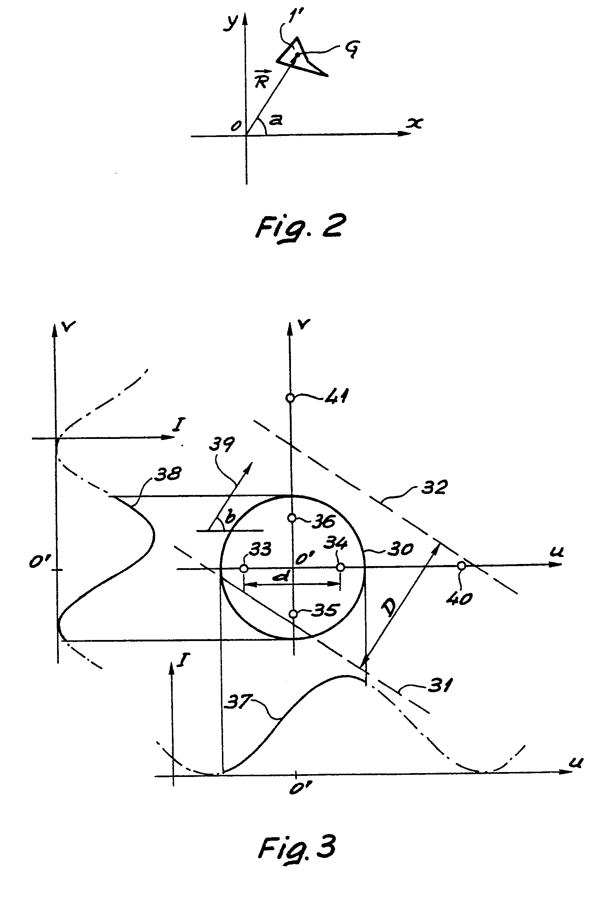

Pour cela, il faut définir un système d'axes perpendiculaires xOy dans le plan 12a, en choisissant de préférence l'origine O au point de ce plan 12a situé sur l'axe optique de la lentille 2. La direction et le sens des axes Ox et Oy peuvent être choisis de manière arbitraire. La figure 2 représente ce plan 12a avec un tel système d'axes et à titre d'exemple l'image 1' d'un objet 1. Le centre de gravité de cette image 1' est désigné par la référence G.

Un système d'axes uO'v dans le plan 28 doit alors être choisi de manière que son origine O' soit située au foyer de la lentille 15, et que les axes O'u et O'v soient perpendiculaires aux franges lorsque le centre de gravité G de l'image 1' de l'objet dans le plan 12a se trouve sur l'axe Ox, respectivement Oy. Le sens positif de ces axes O'u et O'v est défini comme étant le sens du déplacement des franges lorsque ce centre de gravité G se trouve sur la partie positive de l'axe Ox, respectivement Oy.

La figure 3 est une représentation schématique de l'image dans le plan 28 correspondant au cas illustré par la figure 2. Le cercle 30 représente la limite de la tache centrale du spectre de Fourier. Les droites 31 et 32 représentent deux minimums successifs de l'intensité lumineuse des franges, à l'emplacement qu'ils occuperaient, à un instant déterminé, si la phase des ondes lumineuses ne dépendait pas, à l'extérieur de la tache centrale, de la forme de l'objet. L'image réelle composée du spectre de Fourier et des franges d'interférence n'a pas été représentée à l'extérieur de la tache centrale dans cette figure 3.

La théorie de l'optique cohérente montre que la direction et le sens du déplacement des franges dans le système d'axes uO'v, également représenté à la figure 3, sont identiques à la direction et au sens du vecteur $\vec{R}$ joignant dans le plan 12a l'origine O du système d'axes xOy au centre de gravité G de l'image 1' de l'objet 1 (fig 2). L'angle a de la figure 2 est donc égal à l'angle b de la figure 3. La théorie montre également que le pas des franges dans le plan 28, c'est-à-dire la distance D qui sépare, par exemple, les droites 31 et 32 de la figure 3, est inversément proportionnel à la longueur du vecteur $\vec{R}$ défini ci-dessus, c'est-à-dire à la distance entre le centre de gravité G de l'image 1' et l'origine O.

La mesure de cette distance D et de l'angle formé par les franges avec l'axe O'u, par exemple, ou de l'angle b, permet donc de calculer les cordonnées du centre de gravité G de l'image 1' de l'objet dans le plan 12a.

Pour effectuer ces mesures, le détecteur 27 est formé, par exemple, de quatre cellules photoélectriques. Deux de ces cellules, désignées à la figure 3 par les références 33 et 34, sont disposées sur l'axe O'u, de part et d'autre de l'origine O'. Les deux autres cellules, désignées par les références 35 et 36, sont disposées sur l'axe O'v, également de part et d'autre de l'origine O'.

Les courbes 37 et 38 de la figure 3 illustrent la variation sinusoîdale de l'intensité lumineuse I le long des axes O'u et O'v à l'instant représenté. Seule la partie de ces courbes illustrant cette variation à l'intérieur du cercle 30 a une signification réelle. Le reste de ces courbes est théorique pour les raisons évoquées ci-dessus.

Comme les franges d'interférence se déplacent dans la direction symbolisée par la flèche 39, à une vitesse qui ne dépend que de la différence des fréquences des faisceaux 20 et 24, les signaux électreques délivrés par les cellules 33 à 36 varient dans le temps avec une fréquence qui est égale à cette différence de fréquence.

Il est facile de montrer que, si la distance d séparant les cellules 33 et 34 est égale à la distance séparant les cellules 35 et 36, l'angle b est donné par la relation:

$$tg\ b = \frac{P2}{P1}$$

et la distance D par la relation:

$$D = d2\pi(P1^2 + P2^2)^{-1/2}$$

dans lesquelles:
—P1 est la différence de phase des signaux délivrés par les cellules 33 et 34, mesurée en radians;
—P2 est la differérence de phase des signaux délivrés par les cellules 35 et 36, également mesurée en radians.

Il faut noter qu'il serait possible de réaliser les mèmes mesures à l'aide de trois cellules seulement. Deux de ces trois cellules seraient disposées, par exemple, au même emplacement que les cellules 34 et 36, et la troisième serait disposée à l'origine O' du système d'axe uO'v.

Ces mesures des phases relatives P1 et P2, permettent donc de calculer l'orientation et le grandeur du vecteur $\vec{R}$ dans le plan 12a, ce qui donne à l'ordinateur commandant le robot l'information cherchée concernant la position de l'objet.

Pour que ces mesures de phase soient univoques, il est nécessaire que la distance d séparant les cellules 33 et 34 ou 35 et 36 soit inférieure à la plus petite distance possible entre deux franges. Cette plus petite distance est atteinte lorsque l'image de l'objet se trouve au bord extérieur de la face 12a du convertisseur 12. Cette plus petite distance dépend également de la longueur d'onde du faisceau émis par le laser 4, ainsi que de la distance focale de la lentille 15.

En pratique, les cellules ne doivent pas être distantes de plus de quelques millimètres, ce qui peut causer certaines difficultés pour leur montage. Ces difficultés sont surmontées, par exemple, par l'emploi de fibres optiques pour capter la lumière dans le plan 28 aux endroits voulus, et amener cette lumière aux cellules montées à un endroit différent.

En outre, les mesures de phases décrites ci- dessus sont d'autant plus imprécises que la distance entre les cellules est faible. Cet inconvénient peut être surmonté en prévoyant sur chacun des axes O'u et O'v une troisième cellule disposée à une distance nettement plus grande de l'origine

O'. Ces cellules supplémentaires sont désignées par les références 40 et 41 à la figure 3.

Les mesures de phase peuvent alors se faire en deux étapes successives. La première mesure, relativement imprécise, se fait avec les cellules 33 et 34 d'une part et 35 et 36 d'autre part. Cette première mesure est indispensable pour déterminer de manière univoque le sens de déplacement des franges. La seconde mesure, qui donne un résultat plus précis que la première, est faite à partir des signaux fournis par les cellules 33, par exemple, et 40 d'une part et 35, par exemple, et 41, d'autre part.

Cette seconde mesure doit cependant être corrigée en tenant compte du fait que, en dehors de la tache centrale du spectre de Fourier, la phase mesurée comprend un terme qui dépend de l'objet examiné et de son orientation. Il est donc nécessaire de réaliser cette second mesure également pendant l'apprentissage décrit ci-dessus, et de mémoriser dans le circuit 29 les valeurs mesurées pour plusieurs orientantions de chaque type d'objet, tout en laissant bien entendu le centre de gravité de son image à l'origine du système d'axes xOy. Pendant l'utilisation du dispositif, les informations fournies par le circuit 18 concernant le type de l'objet examiné et son orientation sont utilisées par le circuit 29 pour sélectionner une des valeurs mémorisées et pour corriger en consequence la seconde mesure de phase.

La détermination de la position de l'objet en deux étapes, dont la première donne rapidement un résultat encore imprécis et dont la seconde donne ensuite un résultat précis, convient bien à la commande des robots. Ces derniers doivent en effet être mis en marche aussi rapidement que possible. Mais ils n'ont besoin, au début de leur déplacement, que d'une information relativement imprécise sur la position de l'objet qu'ils doivent atteindre. L'information précise dont ils ont besoin pour terminer leur mouvement peut très bien être déterminée pendant leur déplacement.

Un même raisonnement conduit, dans la détermination du type de l'objet examiné et de son orientation décrite ci-dessus, à ne traiter dans une première étape qu'une partie des signaux de mesure fournis par le détecteur 17. Cette première étape comporte donc un nombre réduit de comparaisons, qui sont des opérations relativement lentes. Le résultat fourni par cette première étape est encore imprécis, mais il permet d'éliminer une partie des types d'objets possibles. Il permet en outre de determiner l'orientation approximative de l'objet examiné par rapport à chacun des types d'objets non éliminés.

Dans une deuxième étape, l'ensemble des signaux de mesure fournis par le détecteur 17 est traité de la manière qui a été décrite, mais les comparaisons ne sont faites que avec les signaux de référence correspondant aux types d'objets qui n'ont pas été éliminés lors de la première étape. Ces comparaisons ne sont faites, en outre, que pour quelques orientations entourant l'orientation approximative déterminée lors de la première étape. Le nombre total de comparaisons à effectuer dans les deux étapes est donc bien inférieur au nombre de comparaisons qui doivent être faites si une seule étape est prévue.

Il est évidemment possible de prévoir plus de deux étapes dans cette détermination du type de l'objet examiné et de son orientation.

L'image représentant le spectre de Fourier correspondant à l'objet examiné est également formée dans le plan 28. Il est donc possible de prevoir à cet endroit un détecteur formé par la combinaison des détecteurs 17 et 27 décrits ci-dessus. Le détecteur 17 de la figure 1 pourrait alors être supprimé, et le circuit 18 pourrait être combiné avec le circuit 29. De même, la lame séparatrice 23 pourrait être remplacée par un miroir.

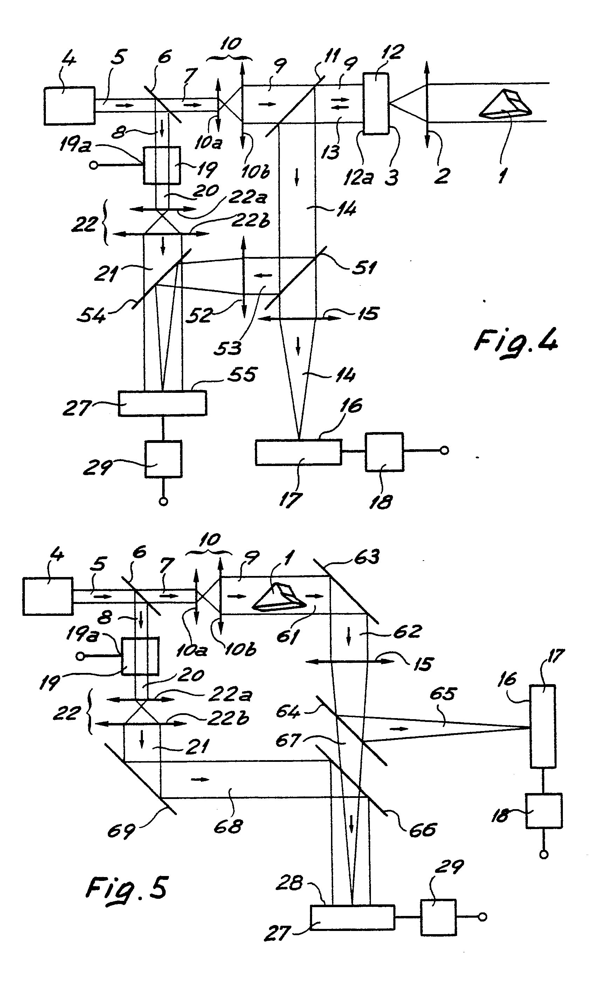

La figure 4 illustre une autre forme d'exécution du dispositif. Les éléments de cette autre forme d'exécution qui sont identiques aux éléments correspondants de la forme d'exécution décrite à l'aide de la figure 1 portent les mêmes numéros de référence.

Dans cette autre forme d'exécution, une lame séparatrice 51 est disposée entre la lame séparatrice 11 et la lentille 15, et une lentille convergente 52 est placée sur le trajet du faisceau 53 réfléchi par la lame 51. Ce faisceau 53 est ensuite combiné avec un faisceau 21, identique au faisceau 21 de la figure 1, par une lame séparatrice 54 pour former dans le plan focal 55 de la lentille 52 une image semblable à l'image formée dans le plan 28 de cette figure 1. Les informations contenues dans cette image sont ensuite traitées de la manièr décrite ci-dessus.

Dans cette forme d'exécution, les distances focales des lentilles 15 et 52 peuvent être différentes, ce qui permet de donner aux images formées dans les plans 16 et 55 des dimensions egalement différentes et adaptées aux dimensions des dètecteurs 17 et 27.

Dans la forme d'exécution illustrée par la figure 5, l'objet examiné 1 est illuminé directement par le faisceau 9 formé par le système optique 10 à partir du faisceau 5 émis par le laser 4. Tous ces éléments, ainsi que tous ceux qui sont désignés par la même référence que dans la figure 1, sont identiques aux éléments correspondants décrits à l'aide de cette figure 1. L'objet 1 doit évidemment être, dans ce cas, porté par un ruban transporteur transparent.

L'occultation partielle du faisceau 9 par l'objet 1 produit un faisceau 61 dans lequel la répartition de l'intensité lumineuse dépend évidemment de l'objet 1.

La lentille 15 est placée sur le trajet du faisceau 62 formé par la réflexion du faisceau 61 sur un miroir 63. Un séparateur 64 est placé sur le trajet du faisceau 62, après la lentille 15, de manière qu'une partie 65 de ce faisceau 62 soit dirigée vers le détecteur 17. Le séparateur 64 et le détecteur 17 sont placés de mainière que la distance optique entre la lentille 15 et le plan 16 soit égale à la distance focale de cette lentille 15.

L'image formée dans ce plan 16 est donc tout à fait semblable à celle qui a été décrite dans le cas de la figure 1. Les informations qu'elle contient au sujet de la nature et de l'orientation de l'objet 1 peuvent être traitées par le détecteur 17 et le circuit 18 exactement comme cela à été décrit dans ce cas.

Un autre séparateur, désigne par la référence 66, est placé sur le trajet de la partie 67 du faisceau 62 qui a traversé le séparateur 64. Ce séparateur 66 joue le même rôle que le séparateur 25 de la figure 1, en combinant le faisceau 67 avec un faisceau de référence 68 obtenu par la réflexion du faisceau 21 sur un miroir 69. Le détecteur 27 est bien entendu placé de manière que le foyer de la lentille 15 soit situé dans le plan 28.

L'image formée dans ce plan 28 est donc tout à fait semblable à celle qui à été décrite dans le cas de la figure 1. Les informations qu'elle contient au sujet de la position de l'objet 1 peuvent être traitées par le détecteur 27 et le circuit 29 exactement comme cela a été décrit dans ce cas.

Il est évident que les figures décrites ci-dessus ne sont que des schémas synoptiques de quelques formes d'exécution de l'invention. D'autres dispositions relatives des différents composants peuvent être prévues sans sortir du cadre de l'invention. En outre, d'autres lames séparatrices, d'autres miroirs et/ou d'autres lentilles peuvent être nécessaires pour former ou diriger les différents faisceaux de manière compatible avec la disposition réelle des composants tels que le laser, le dispositif de transport des objets, le modulateur de fréquence, les détecteurs photo-électriques et le convertisseur incohérent-cohérent. Il est notamment souhaitable de disposer les différents composants de manière que les longueurs des différents trajets optiques entre le laser et les détecteurs photo-électriques soient sensiblement égales. Les inconvénients dus à des variations éventuelles dans le temps de la cohérence du faisceau émis par le laser peuvent ainsi être évités.

Il est également évident que les différentes lentilles décrites ci-dessus peuvent être remplacées par des systèmes optiques plus complexes, agencés de manière à supprimer les aberrations généralement provoquées par les simples lentilles.

Il est enfin aussi évident que les fonctions réalisées par les circuits de traitement d'informations 18, 29, et peuvent être au moins partiellement remplacées par des fonctions réalisées par l'ordinateur de commande du robot auquel est associé le dispositif.

**Revendications**

1. Procédé d'identification d'un objet et de mesure de sa position et de son orientation consistant à:
—produire un premier faisceau uniforme (9) de lumière cohérente ayant une première fréquence;
—produire un faisceau de lumière module (13) représentatif de la forme, de l'orientation et la position dudit objet (1) en modulant spatialement ledit premier faisceau umiforme en réponse audit objet;

—produire dudit faisceau modulé un premier faisceau convergent (14) ayant un premier plan de convergence (16);

—extraire une première information en réponse à l'intensité dans une partie au moins dudit premier plan de convergence, cette première infomation étant représentative de la forme et de l'orientation dudit objet:

caracterisé en ce que

—l'on produit un deuxième faisceau uniforme (21) de lumière cohérente ayant une deuxième frequence différente de ladite première fréquence;

—l'on fait interférer ledit premier faisceau convergent (14) avec ledit deuxième faisceau uniforme (21), et

—l'on extrait une deuxième information en réponse à des variations d'intensité lumineuse dans une partie au moins dudit premier plan de convergence, cette deuxième information étant représentative de la position dudit objet.

2. Procédé selon la revendication 1, caracterisé en ce que l'on produit dudit faisceau module (13) un deuxième faisceau convergent (24) ayant un deuxième plan de convergence (28) et en ce que l'on fait interférer ce deuxième faisceau convergent (24) avec ledit deuxième faisceau uniforme (21) dans ledit deuxième plan de convergence (28), et en ce que l'on extrait ladite deuxième information en réponse à des variations d'intensité lumineuse dans une partie au moins dudit deuxième plan de convergence (28).

3. Procédé selon la revendication 2, caractérisé en ce que l'on fusionne ledit premier faisceau convergent avec ledit deuxième faisceau convergent et que l'on fait interférer ledit faisceau convergent avec ledit deuxième faisceau uniforme et que l'on fusionne ledit premier plan de convergence avec ledit deuxième plan de convergence.

4. Dispositif d'identification d'un objet et de mesure de sa position et de son orientation comprenant:

—des moyens (4,10) pour produire un premier faisceau uniforme (9) de lumière cohérente ayant un première fréquence,

—des moyens (12) pour produire un faisceau module (13) représentatif de la forme, l'orientation et la position dudit objet par modulation spatiale dudit premier faisceau uniforme en réponse audit objet (1),

—des moyens (15) pour faire converger ledit faisceau modulé (13) afin de former un premier faisceau convergent (14) ayant un premier plan de convergence (16),

— des moyens (17, 18) pour extraire une première information en réponse à l'intensité lumineuse dans une partie au moins dudit premier plan de convergence (16), cette première information étant représentative de la forme et de l'orientation dudit objet, caracterisé par

—des moyens (4,19,22) pour produire un deuxième faisceau uniforme (21) de lumière cohérente ayant une deuxième fréquence différente de ladite première fréquence,

—des moyens (15,23,25) pour produire dudit faisceau modulé (13) un deuxième faisceau convergent (24) ayant un deuxième plan de convergence (28),

—des moyens (23,25) pour faire interférer ledit deuxième faisceau uniforme (21) avec ledit deuxième faisceau convergent (24) dans ledit deuxième plan de convergence (28), et

—des moyens (27,29) pour extraire une deuxième information en réponse à des variations d'intensité lumineuse dans une partie au moins dudit deuxième plan de convergence, cette deuxième information étant représentative de la position dudit objet.

5. Dispositif selon la revendication 4, caractérisé en ce que lesdits moyens pour produire un faisceau modulé comprennent un convertisseur incohérent-cohérent (12), des moyens (2) pour former dudit objet (1) une image en lumière incohérente sur ce convertisseur, et des moyens (10,11) pour diriger ledit premier faisceau (9) sur ce convertisseur, ce convertisseur (12) produisant ledit faisceau modulé (13).

6. Dispositif selon la revendication 4, caractérisé en ce que lesdits moyens pour produire un faisceau modulé comprennent des moyens (10) pour diriger ledit premier faisceau uniforme (9) vers ledit objet (1), ledit faisceau module (62) etant produit par l'occultation partielle dudit premier faisceau par ledit objet.

7. Dispositif selon la revendication 4, caractérisé en ce que lesdits moyens pour faire converger ledit faisceau module (13) comprennent une lentille convergente (15) ayant un premier foyer dans ledit premier plan de convergence (16).

8. Dispositif selon la revendication 7, caractérisé en ce que lesdits moyens (17,18) pour extraire ladite première information comprennent un premier détecteur photoélectrique disposé dans ledit premier plan de convérgence (16) et une première pluralité de cellules photoélectriques disposées à des distances sensiblement égales dudit premier foyer afin de produire un premier signal en réponse à ladite intensité lumineuse.

9. Dispositif selon la revendication 8, caractérisé en ce que lesdits moyens (17,18) pour extraire ladite première information comprennent des moyens pour mémoriser au moins un signal de référence, des moyens pour mémoriser ledit premier signal, et des moyens pour mesurer une correlation entre ledit signal de référence et ledit premier signal mémorisé.

10. Dispositif selon la revendication 7 caractérisé en ce que lesdits moyens pour produire ledit deuxième faisceau convergent (24) comprennant un moyen (23) pour dévier une partie dudit premier faisceau convergent (14), ladite lentille (15) convergente ayant ainsi un deuxième foyer dans ledit deuxième plan de convergence (28), et en ce que lesdits moyens pour faire interférer ledit deuxième faisceau uniforme (21) avec ledit deuxième faisceau convergent (24) comprennent un moyen (25) pour rendre ledit deuxième faisceau uniforme (21) coaxiale avec ladite partie déviée dudit premier faisceau convergent (24).

11. Dispositif selon la revendication 10 caractérisé en ce que lesdits moyens (27, 29) pour extraire ladite deuxième information comprennent un deuxième détecteur photoélectrique (27) disposé dans ledit deuxième plan de convergence (28) et une deuxième pluralité de cellules photoélectriques (33—36 disposées sur deux axes perpendiculaires passant par ledit deuxième foyer.

12. Dispositif selon la revendication 11 caractérisé en ce que ladite deuxième pluralité de cellules photo-électriques comprend une première cellule disposée audit deuxième foyer et une deuxième (34) et troisième (36) cellules disposées chacune sur un desdits axes et les deux à une première distance dudit deuxième foyer.

13. Dispositif selon la revendication 12 caractéisé en ce que ladite deuxième pluralité de cellules photo-électriques comprend une quatrième (33) et cinquième (35) cellules disposées chacune sur un desdits axes et les deux à une deuxième distance dudit deuxième foyer supérieure à ladite première distance.

14. Dispositif selon la revendication 12 caractérisé en ce que lesdits moyens (27,28) pour extraire ladite deuxième information comprennent un moyen pour mesurer des phases relatives des signaux produits par lesdites deuxième et troisième cellules par rapport à un signal produit par ladite première cellule.

15. Dispositif selon la revendication 11 caractérisé en ce que ladite deuxième pluralite de cellules photo-électriques comprend quatre cellules (33—36) disposées en paires sur chacun desdits axes à une première distance des deux cotés dudit deuxième foyer.

16. Dispositif selon la revendication 15 caractérisé en ce que ladite deuxième pluralité comprend une cinquième et une sixième cellules disposées chacune sur un desdits axes à und deuxième distance dudit deuxième foyer supérieure à cette première distance.

17. Dispositif selon la revendication 15 caractérisé en ce que lesdits moyens pour extraire ladite deuxième information comprennent des moyens pour mesurer des phases relatives d'un signal produit par une cellule de chaque paire par rapport à un signal produit par une autre cellule de cette paire.

18. Dispositif selon la revendication 4 caractérisé en ce que lesdits moyens pour produire un premier faisceau convergent sont compris dans lesdits moyens pour produire un deuxième faisceau convergent, ledit premier faisceau convergent étant fusionné avec ledit deuxième faisceau convergent, et en ce que lesdits moyens pour faire interférer ledit deuxième faisceau convergent avec ledit deuxième faisceau uniforme font également interférer ledit premier faisceau convergent avec ledit deuxième faisceau uniforme.

**Patentansprüche**

1. Verfahren zur Identifikation eines Objekts und zur Bestimmung seiner Lage und seiner Orientierung, wobei

—ein erster gleichförmiger Strahl (9) aus kohärentem Licht einer ersten Frequenz gebildet wird;

—ein modulierter Lichtstrahl (13), der repräsentativ ist für die Form, die Orientierung und die Lage des genannten Objekts (1), gebildet wird durch dem Objekt entsprechende räumliche Modulation des ersten gleichförmigen Strahls;

—aus dem modulierten Lichtstrahl ein erster konvergenter Strahl (14) mit einer ersten Konvergenzebene (16) gebildet wird;

—aus der Intensitätsverteilung in wenigstens einem Teil der ersten Konvergenzebene eine erste Information genommen wird, die für die Form und die Orientierung des Objekts repräsentativ ist;

dadurch gekennzeichnet, dass

—man einen zweiten gleichförmigen Strahl (21) aus kohärentem Licht einer zweiten, von der ersten unterschiedlichen Frequenz erzeugt;

—man den genannten ersten konvergenten Strahl (14) mit dem zweiten gleichförmigen Strahl (21) zur Interferenz bringt; und

—man aus der Lichtintensitätsverteilung in wenigstens einem Teil der ersten Konvergenzebene eine zweite Information gewinnt, die für die Lage des Objekts repräsentativ ist.

2. Verfahren nach Anspruch 1, dadurch gekennzeichnet, dass man aus dem genannten modulierten Lichtstrahl (13) einen zweiten konvergenten Strahl (24) mit einer zweiten Konvergenzebene erzeugt und diesen mit dem genannten zweiten gleichförmigen Strahl (21) in der zweiten Konvergenzebene zur Interferenz bringt, und dass man die genannte zweite Information aus der Lichtintensitätsverteilung in wenigstens einem Teil der zweiten Konvergenzebene (28) gewinnt.

3. Verfahren nach Anspruch 2, dadurch gekennzeichnet, dass man den ersten konvergenten Strahl mit dem zweiten konvergenten Strahl vereinigt und den konvergenten Strahl mit dem zweiten gleichförmigen Strahl zur Interferenz bringt und die erste Konvergenzebene mit der zweiten Konvergenzebene zusammenfallen lässt.

4. Vorrichtung zur Identifikation eines Objekts und zur Bestimmung seiner Lage und seiner Orientierung mit

—Mitteln (4,10) zur Erzeugung eines ersten gleichförmigen Strahls (9) aus kohärentem Licht einer ersten Frequenz,

—Mitteln (12) zur Erzeugung eines modulierten Lichtstrahls (13), der für die Form, die Orientierung und die Position des Objekts repräsentativ ist, durch dem Objekt entsprechende räumliche Modulation des ersten gleichförmigen Strahls,

—Mitteln (15), um aus dem modulierten Strahl (13) einen ersten konvergenten Strahl (14) zu formen, der in einer ersten Konvergenzebene (16) konvergiert,

—Mitteln (17,18), um aus der Lichtintensität in wenigstens einem Teil der ersten Konvergenzebene (16) eine erste Information zu gewinnen, die für die Form und die Orientierung des Objekts repräsentativ ist,

gekennzeichnet durch

—Mittel (4,19,22) zu Erzeugung eines zweiten gleichförmigen Strahls (21) aus kohärentem Licht einer zweiten, von der ersten verschiedenen Frequenz,

—Mittel (15,23,25) zur Erzeugung eines zweiten konvergenten Strahls (24) mit einer zweiten Konvergenzebene (28) aus dem genannten modulierten Strahl (13),

—Mittel (23,25), um den zweiten gleichförmigen Strahl (21) mit dem zweiten konvergenten Strahl (24) in der zweiten Konvergenzebene (28) zur Interferenz zu bringen, und

—Mittel (27,29), um aus der Intensitätsverteilung in wenigstens einem Teil der zweiten Konvergenzebene eine zweite Information zu gewinnen, die für die Lage des Objekts repräsentativ ist.

5. Vorrichtung nach Anspruch 4, dadurch gekennzeichnet, dass die Modulationsmittel einen Inkohärent-Kohärent-Wandler (12), Mittel (2) zur inkohärenten Abbildung des Objekts (1) auf den Wandler und Mittel (10,11) zur Beaufschlagung des Wandlers mit dem ersten gleichförmigen Strahl (9) umfassen, wobei der Wandler den modulierten Strahl (13) erzeugt.

6. Vorrichtung nach Anspruch 4, dadurch gekennzeichnet, dass die Modulationsmittel Leitmittel (10) umfassen, welche den ersten gleichförmigen Strahl (9) auf das Objekt (1) richten, wobei der modulierte Strahl (62) durch teilweise Abschattung des ersten Strahls durch das Objekt entsteht.

7. Vorrichtung nach Anspruch 4, dadurch gekennzeichnet, dass die Mittel zur Konvergierung des modulierten Strahls (13) eine Sammellinse (15) mit erstem Brennpunkt in der ersten Konvergenzebene (16) umfassen.

8. Vorrichtung nach Anspruch 7, dadurch gekennzeichnet, dass die Mittel (17, 18) zur Gewinnung der ersten Information einen ersten, in der ersten Konvergenzebene (16) angeordneten Fotodetektor und eine erste Mehrzahl von Fotozellen umfassen, welche in im wesentlichen gleichen Abständen vom ersten Brennpunkt angeordnet sind, um ein erstes Signal in Abhängigkeit von der Lichtintensität zu erzeugen.

9. Vorrichtung nach Anspruch 8, dadurch gekennzeichnet, dass die Mittel (17,18) zur Gewinnung der ersten Information Mittel zur Speicherung wenigstens eines Referenzsignals, Mittel zur Speicherung des genannten ersten Signals und Mittel zur Bestimmung der Korrelation zwischen dem gespeicherten Referenzsignal und dem gespeicherten ersten Signal umfassen.

10. Vorrichtung nach Anspruch 7, dadurch gekennzeichnet, dass die Mittel zur Erzeugung des zweiten konvergenten Strahls (24) Mittel (23) zur Ablenkung eines Teils des ersten konvergenten Strahls (14) und die genannte Sammellinse (15) mit ihrem zweiten Brennpunkt in der zweiten Konvergenzebene (28) umfassen, und dass die Mittel zum Interferieren des zweiten gleichförmigen Strahls (21) mit dem zweiten konvergenten Strahl (24) ein Mittel (25) umfassen, um den zweiten gleichförmigen Strahl (21) koaxial mit dem genannten umgelenkten Teil des ersten konvergenten Strahls (24) zu machen.

11. Vorrichtung nach Anspruch 10, dadurch gekennzeichnet, dass die Mittel (27,29) zur Gewinnung der zweiten Information einen zweiten, in der zweiten Konvergenzebene (28) angeordneten Fotodetektor (27) und eine zweite Mehrzahl von Fotozellen (33—36) umfassen, welche auf zwei zueinander senkrechten, durch den zweiten Brennpunkt verlaufenden Achsen angeordnet sind.

12. Vorrichtung nach Anspruch 11, dadurch gekennzeichnet, dass die zweite Mehrzahl von Fotozellen eine erste, im zweiten Brennpunkt angeordnete Zelle und eine zweite (34) und eine dritte (36) Zelle umfasst, die auf je einer der Achsen und beide in einem ersten Abstand vom zweiten Brennpunkt angeordnet sind.

13. Vorrichtung nach Anspruch 12, dadurch gekennzeichnet, dass die zweite Mehrzahl von Fotozellen eine vierte (33) und eine fünfte (35) Zelle umfasst, die auf je einer der Achsen und beide in einem zweiten, gegenüber dem ersten grösseren Abstand vom zweiten Brennpunkt angeordnet sind.

14. Vorrichtung nach Anspruch 12, dadurch gekennzeichnet, dass die Mittel (27,29) zur Gewinnung der zweiten Information ein Messmittel für die relativen Phasen der von der zweiten und dritten Zelle erzeugten Signale relativ zu einem von der ersten Zelle erzeugten Signal aufweisen.

15. Vorrichtung nach Anspuch 11, dadurch gekennzeichnet, dass die zweite Mehrzahl von Fotozellen vier Zellen (33—36) umfasst, die paarweise auf je einer der Achsen je im ersten Abstand auf gegenüberliegenden Seiten des zweiten Brennpunkts angeordnet sind.

16. Vorrichtung nach Anspruch 15, dadurch gekennzeichnet, dass die zweite Mehrzahl von Fotozellen eine fünfte und eine sechste Zelle umfasst, die je auf einer der Achsen in einem zweiten, gegenüber dem ersten grösseren Abstand vom zweiten Brennpunkt angeordnet sind.

17. Vorrichtung nach Anspruch 15, dadurch gekennzeichnet, dass die Mittel zur Gewinnung der zweiten Information ein Messmittel für die relativen Phasen eines von einer Zelle jedes Paars erzeugten Signals zu dem von der anderen Zelle dieses Paars erzeugten Signal aufweisen.

18. Vorrichtung nach Anspruch 4, dadurch gekennzeichnet, dass die Mittel zur Erzeugung des ersten konvergenten Strahls in derjenigen zur Erzeugung des zweiten konvergenten Strahls enthalten sind, wobei die beiden konvergenten Strahlen vereint sind, und dass die Interferenzmittel für den zweiten konvergenten Strahl und den zweiten gleichförmigen Strahl auch den ersten konvergenten Strahl mit dem zweiten gleichförmigen Strahl zur Interferenz bringen.

**Claims**

1. Process for the identification of an object and for measuring its position and its orientation, consisting of:

—producing a first uniform beam (9) of coherent light, having a first frequency;

—producing a modulated beam of light (13) that is representative of the shape, the orientation and the position of said object (1) by spatially modulating said first uniform beam in response to said object;

—producing from said first modulated beam a focusing beam (14) having a first convergence plane (16);

—extracting a first information in response to the intensity in at least one part of said first convergence plane, said first information being representive of the shape and orientation of said object; characterized in that

—a second uniform beam (21) of coherent light is produced, having a frequency that is different from said first frequency;

—said first focusing beam (14) is made to interfere with said second uniform beam (21), and

—a second information is extracted in response to the variation of the luminous intensity in at least part of said first convergence plane, said second information being representative of the position of said object.

2. Process according to Claim 1, characterized in that from said modulated beam (13) a second focusing beam (24) having a second convergence plane (24) is produced and that said second focusing beam (24) is made to interferre with said second uniform beam (21) in said second plane of convergence (28) and that said second information is extracted in response to the variation of the luminous intensity in at least one part of said second plane of convergence (28).

3. Process according to Claim 2, characterized in that said first focusing beam is fused with said second uniform beam and that said second first convergence plane is fused with said second convergence plane.

4. Device to identify an object and to measure its position and its orientation comprising:

—means (4, 10) to produce a first uniform beam of coherent light having a first frequency,

—means (12) to produce a modulated beam (13) representative of the shape, the orientation and the position of said object by the spatial modulation of said first uniform beam in response to said object (1),

—means (15) to make said modulated beam (13) to converge in order to form a first convergent beam (14) having a first convergence plane (16),

—means (17,18) to extract a first information in response to the luminous intensity in at least one part of the convergence plane (16), said first information being representative of the shape and the orientation of said object, characterized by:

—means (4,19,22) to produce a second uniform beam of coherent light with a second frequency different from said first frequency,

—means (15,23,25) to produce from said modulated beam (13) a second convergent beam (24) having a second convergence plane (28),

—means (23,25) to make said second uniform beam (21) interfere with said second convergent beam (24) in said second convergence plane (28), and

—means (27,29) to extract a second information in response to the variation of the luminous intensity in at least part of said second covergence plane, said second information being representative of the position of said object.

5. Device according to Claim 4, characterized in that said means to produce a modulated beam comprise an incoherent-coherent converter (12), means (2) to form of said object (1) an image in incoherent light on said converter, and means (10,11) to direct said first beam (9) onto the converter, said converter (12) producing said modulated beam (13).

6. Device according to Claim 4, characterized in that said means to produce a modulated beam comprise means (10) to direct said first uniform beam (9) toward said object (1), said modulated beam (62) being produced by the partial masking of said first beam by said object.

7. Device according to Claim 4, characterized in that said means to make converge said modulated beam (13) comprise a convergent lens (15) having a first focus in said first plane of convergence (16).

8. Device according to Claim 7, characterized in that said means (17,18) to extract said first information comprise a first photoelectric detector located in said first convergence plane (16) and a first plurality of photoelectric cells located at essentially equal distances from said first focus in order to produce a first signal in response to said luminous intensity.

9. Device according to Claim 8, characterized in that said means (17,18) to extract said first information comprise means to store in memory at least one reference signal, means to store in memory said first signal, and means measure a correlation between said reference signal and said stored first signal.

10. Device according to Claim 7, characterized in that said means to produce said second convergent beam (24) comprise a means (23) to deflect a part of said first convergent beam (14), said convergent lens (15) therefore having a second focus in said second convergence plane (28) and in that said means to make said second uniform beam (21) interfere with said second convergent beam (24) comprises a means (25) to render said second uniform beam (21) coaxial with said deflected part of said first convergent beam (24).

11. Device according to Claim 10, characterized in that said means (27,29) to extract said second information comprise a second photoelectric detector (27) located in said second convergence plane (28) and a second plurality of photoelectric cells (33-36) located on two perpendicular axes passing through said second focus.

12. Device according to Claim 11, characterized in that said second plurality of photoelectric cells comprises a first cell located at said second focus and a second (34) and third (36) cell, each located on one of said axes and at a first distance from said second fucus.

13. Device according to Claim 12, characterized in that said second plurality of photoelectric cells comprises fourth (33) and fifth (35) cells, each being located on one of said axes and both at a second distance from said second focus, said second distance being larger than said first distance.

14. Device according to Claim 12, characterized in that said means (27,29) to extract said second information comprise a means to measure the relative phases of the signals produced by said second and third cells relative to a signal produced by said first cell.

15. Device according to Claim 11, characterized in that said second plurality of photoelectric cells contains four cells (33-36) placed in pairs on each of said axes at a first distance of either side of said second focus.

16. Device according to Claim 15, characterized in that said second plurality comprises a fifth and a sixth cell, each placed on one of said axes at a second distance from said second focus which is larger than said first distance.

17. Device according to Claim 15, characterized in that said means to extract said second information comprises means to measure the relative phases of a signal produced by one cell of each pair with respect to a signal produced by another cell of said pair

18. Device according to Claim 4, characterized in that said means to produce a first convergent beam are comprised in said means to produce a second convergent beam, said first convergent beam being fused with said second convergent beam, and in that said means to make said second convergent beam interfere with said second uniform beam also cause said first convergent beam to interfere with said second uniform beam.

**Fig.1**

*Fig. 2*

*Fig. 3*

Fig.4

Fig.5